# EUROPEAN PATENT APPLICATION

(11) **EP 4 649 841 A1**
(43) Date of publication of application: **19.11.2025**
(21) Application number: 24184021.4
(22) Date of filing: 24.06.2024
(51) Int. Cl.: A24F 40/40

(54) **AEROSOL PROVISION DEVICE**

(30) Priority: 14.05.2024 CN 202410598027
(71) Applicant: Nicoventures Trading Limited, London WC2R 3LA (GB)
(72) Inventor: CAO, Qixian, Shenzhen (CN); LI, Bingquan, Shenzhen (CN); QU, Haigang, Shenzhen (CN)
(74) Representative: Dehns

(57) **Abstract**

An aerosol provision device and method of assembly thereof, the aerosol provision device comprising a power source electrically connected via an electrical connector for powering one or more components of the aerosol provision device, and a support which supports the electrical connector and retains the electrical connector in electrical connection with the power source. A power module comprising the power source and the support.

## Description

### TECHNICAL FIELD

The present disclosure relates to an aerosol provision device and an aerosol provision system.

### BACKGROUND

Smoking articles such as cigarettes, cigars and the like burn tobacco during use to create tobacco smoke. Attempts have been made to provide alternatives to these articles that release compounds without burning, by providing an aerosol provision devices and systems which are configured to heat (but not burn) an aerosol generating material. The aerosol generating material may be for example tobacco or other non-tobacco products, which may or may not contain nicotine. Such aerosol provision devices may comprise a power source, for example to power a heating arrangement of the device.

### SUMMARY

In accordance with an aspect of the present invention, there is provided an aerosol provision device for generating aerosol from an aerosol-generating material, the aerosol provision device comprising: a power source for powering one or more components of the aerosol provision device; an electrical connector for electrically connecting to the power source; and a support supporting the electrical connector, the support configured to retain the electrical connector in electrical connection with the power source .

In embodiments, the aerosol-generating material is in the form of one or more of a solid, a liquid, a gel, a wax or the like. In embodiments, the aerosol-generating material comprises a liquid. In embodiment, the aerosol-generating material comprises nicotine.

In embodiments, the aerosol provision device comprises a heating arrangement arranged to heat the aerosol generating material.

In embodiments, the power source (electrically) powers a heating arrangement of the aerosol provision device and/or any other suitable electrical component of the device.

In embodiments, the power source is a battery.

In embodiments, the power source is provided (received) within a power source accommodating portion of the device. In embodiments, the power source is entirely contained within the power source accommodating portion of the device (within the device housing).

In embodiments, the electrical connector protrudes into a power source receiving portion of the device, for electrically connecting to the power source. In embodiments, the electrical connector has a longitudinal extent (along which it protrudes), in embodiment being a pin or thimble type electrical connector. In embodiments, the electrical connector is rigid, and in embodiments is rigidly mounted in the device.

In embodiments, the electrical connector is provided at a distal end of the power source receiving portion of the device in embodiments so that the power source forms an electrical connection with the electrical connector (only) when it is substantially fully inserted into the power source receiving portion.

In embodiments, the support is moveable and/or deformable transversely relative to the electrical connector.

In embodiments, wherein the support (40) is formed at least partially of a resilient material. In embodiments, the resilient material comprises silicone and/or rubber.

In embodiments, the support is formed entirely of resilient material.

In embodiments, the support is formed of an electrically insulating material.

In embodiments, the support comprises a recess for receiving the electrical connector.

In embodiments, the support comprises a pair of recesses for each receiving an electrical connector of a pair of electrical connectors.

In embodiments, the recess extends partially, but not fully, through the thickness of the support.

In embodiments, the recess is configured to contact and support at least part of the outer periphery of the electrical connector.

In embodiments, the recess has a tapered opening.

In embodiments, the support comprises one or more deformable elements.

In embodiments, the deformable elements are configured to permit deformation of the support in its transverse (in-plane) direction.

The deformable element(s) may be provided at the periphery of the support, or within the body of the support (away from its periphery). The deformable element(s) may comprise any of: recesses, protrusions, through-holes, and cavities within the material of the support.

In embodiments, the one or more deformable elements comprises a pattern of one or more indents and/or protrusions at a periphery of the support.

In embodiments, the periphery of the support comprises a pattern plural indents and/or plural protrusions. In embodiments the plural indents and/or protrusions are spaced substantially evenly about the periphery of the support. In embodiments the width of each protrusion (as measured along the periphery of the support) differs from, in embodiments is smaller than, the width of each indent (as measured along the periphery of the support).

In embodiments, the support is held by a holder configured to restrict movement of the support.

In embodiments, the holder is formed of a non-resilient (rigid) material.

In embodiments, the holder extends about at least part of (in embodiments about the entirety of) a transverse periphery of the support, to restrict transverse movement of the support.

In embodiments, a least a portion of the holder is provided between the support and the power source. In embodiments, at least a portion of the holder grips the support to restrict out-of-plane (upwards and/or downwards) movement of the support.

In embodiments, the support is provided adjacent an end of the power source.

In embodiments, the support is provided (only) at (adjacent) a (single) longitudinal end of the power source. In embodiments, the support does not extend does not extend along any longitudinal side of the power source. In embodiments, the support does not extend transversely beyond the limits of the end of the power source.

In embodiments, the power source has a cylindrical or cuboidal shape, such that the (longitudinal) ends of the power source have a substantially circular or rectangular shape.

In embodiments, the support comprises a central portion having a rectangular or circular shape.

In embodiments, the power source is removable from the aerosol provision device. In embodiments, the power source and the support are removable from the aerosol provision device. In embodiments, the power source and the support (and optionally the holder for the support), are removable together from the aerosol provision device, as a power module.

In embodiments, the power source and support form a power module which is removable from the device. In embodiments the power module also comprises one or more of: a holder for the support, an outer casing for the power source, and an end cover for the power source).

In embodiments, the power source (power module) is removable from a bottom side of the device.

In embodiments, the device has an opening through which the power source (power module) can be inserted (into the power source accommodation portion) and/or removed (from the power source accommodating portion). In embodiments, the opening is at least partially covered by a (removable) portion of a housing of the device.

In accordance with an aspect of the present invention, there is provided an aerosol provision system comprising: an aerosol provision device; and aerosol-generating material. The aerosol provision device may have any of the features described herein (including any of the features of the above embodiments).

In embodiments, the aerosol provision device comprises the aerosol generating material (such that the aerosol generating material is provided as part (contained within) of the aerosol provision device.

In embodiments, the aerosol provision device comprises a reservoir containing liquid aerosol generating material.

In accordance with an aspect of the present invention, there is provided a power module for an aerosol provision device, the power module comprising: a power source; and a support, the support configured to receive an electrical connector of an aerosol provision, and retain the electrical connector in electrical connection with the power sources. The power module and support may have any of the features described herein (including any of the features of the above embodiments).

In embodiments, the power module further comprises a holder, for example having any of the features described herein (including any of the features of the above embodiments).

In embodiments the power module further comprises an outer casing and/or a bottom cover for protecting the power source from damage.

In embodiments, the power module is removable from and/or insertable into the aerosol provision device.

In accordance with an aspect of the present invention, there is provided a method of assembling an aerosol provision device comprising an electrical connector for electrically connecting to a power source, the method comprising:
providing a support to support the electrical connector of the aerosol provision device; and
electrically connecting the power source to the electrical connector, the power source being retained in electrical connection with the electrical connector by the support.

In embodiments, the support and the power source are provided together, and form a power module for the aerosol provision device. In embodiments, the power module is provided to (inserted into) the aerosol provision device in an orientation in which the support enters the device before the power source.

The aerosol provision device, electrical connector, power source, support, and power module may have any of the features described herein (including any of the features of the above embodiments).

Any aspect may comprise any feature described with respect to another aspect.

### FIGURES

Aspects of the invention will now be described, by way of example only, with reference to accompanying drawings, in which:
Figures 1 and 2 are each a schematic representation of an aerosol provision systems in an embodiment of the present disclosure, the aerosol provision system comprising a power source and comprising a support to retain an electrical connector in electrical connection with the power source;
Figure 3 is a perspective view of an aerosol provision system in an embodiment, showing various features in more detail;
Figure 4 illustrates removal of the power source and the support from the aerosol provision system of Figure 3;
Figure 5 is a bottom view illustrating the fixing of the power source within the aerosol provision system of Figure 3;
Figure 6A is a perspective view of a power source and a support, forming part of a power module for an aerosol provision device in embodiments of the present disclosure;
Figure 6B is a cross-sectional view of the power module of Figure 6A along line A-A;
Figure 7A is a view of the power module Fig. 6A illustrating receiving an electrical connector within the support;
Figure 7B is a cross-sectional view of Figure 7A along line B-B; and
Figure 8 is a flow chart showing method steps for assembling an aerosol provision system in an embodiment.

It will be appreciated that the figures, whilst illustrating various aspects and features of the present disclosure, are not exhaustive and/or exclusive.

Like reference signs are used for like features in the figures.

### DETAILED DESCRIPTION

Aspects and features of certain examples and embodiments are discussed or described herein. Some aspects and features of certain examples and embodiments may be implemented conventionally and these are not discussed/described in detail in the interests of brevity. It will thus be appreciated that aspects and features of apparatus and methods discussed herein which are not described in detail may be implemented in accordance with any conventional techniques for implementing such aspects and features.

Aspects of the present disclosure concern an aerosol provision device for generating aerosol from an aerosol-generating material, an aerosol provision system comprising an aerosol-generating material, a power module for an aerosol provision device, and methods of use thereof.

As used herein, the term "aerosol-generating material" is a material that is capable of generating aerosol, for example when heated, irradiated or energized in any other way. Aerosol-generating material may, for example, be in the form of a solid, liquid or gel which may or may not contain an active substance and/or flavourants. Aerosol-generating material may include any plant based material, such as tobacco-containing material and may, for example, include one or more of tobacco, tobacco derivatives, expanded tobacco, reconstituted tobacco or tobacco substitutes. Aerosol-generating material also may include other, non-tobacco, products, which, depending on the product, may or may not contain nicotine. Aerosol-generating material may for example be in the form of a solid, a liquid, a gel, a wax or the like. Aerosol-generating material may for example also be a combination or a blend of materials. Aerosol-generating material may also be known as "smokable material".

The aerosol-generating material may comprise constituents which impart a physiological effect on the user, a sensorial effect on the user, or both.

The aerosol-generating material may comprise any one or more of a binder, an aerosol former, a flavourant, an active substance, and a filler. An active substance, when delivered to a user, may result in some form of psychological effect on the user. Optionally, a solvent, such as water, is also present and one or more other components of the aerosol-generating material may or may not be soluble in the solvent. In some embodiments, the aerosol-generating material is substantially free from botanical material. In some embodiments, the aerosol-generating material is substantially tobacco free.

The aerosol-generating material may comprise or be an "amorphous solid". The amorphous solid may be a "monolithic solid". In some embodiments, the amorphous solid may be a dried gel. The amorphous solid is a solid material that may retain some fluid, such as liquid, within it. In some embodiments, the aerosol-generating material may, for example, comprise from about 50wt%, 60wt% or 70wt% of amorphous solid, to about 90wt%, 95wt% or 100wt% of amorphous solid.

The aerosol-generating material may comprise an aerosol-generating film. The aerosol-generating film may comprise or be a sheet, which may optionally be shredded to form a shredded sheet. The aerosol-generating sheet or shredded sheet may be substantially tobacco free.

The aerosol provision device of the present disclosure may be configured to generate aerosol from an aerosol generating material (which may be provided to the aerosol provision device in any suitable and desired way). The aerosol provision device and aerosol generating material together may be referred to herein as an aerosol generating system.

According to the present disclosure, the aerosol provision device (aerosol provision device system) may comprise a "non-combustible" aerosol provision device (system) where an aerosol-generating material is not combusted or burned in order to facilitate delivery of at least one substance to a user.

Thus, in some embodiments, the aerosol provision device (system) is a non-combustible aerosol provision device (system), such as a powered non-combustible aerosol provision device (system).

Without limitation, non-combustible aerosol provision devices (systems) which may be embodied in the present disclosure include heat-not-burn aerosol provision devices (systems) (such as Tobacco Heating Products (THPs) and Carbon-tipped Tobacco Heating Products (CTHPs)) in which a solid material is heated to generate aerosol without combusting the material, vapour aerosol provision devices (systems) (commonly known as "electronic cigarettes" or "e-cigarettes") in which liquid material is heated to generate aerosol, and hybrid aerosol provision devices (systems) that are similar to vapour aerosol provision systems except that the aerosol generated from the liquid material passes through a second material (such as tobacco) to pick up additional constituents before reaching the user.

In some embodiments, the non-combustible aerosol provision device (system) is an electronic cigarette, also known as a vaping device or electronic nicotine delivery (END) device (system), although it is noted that the presence of nicotine in the aerosol-generating material is not a requirement.

In some embodiments, the non-combustible aerosol provision device (system) is an aerosol-generating material heating device (system), also known as a heat-not-burn device (system). An example of such a device (system) is a tobacco heating device (system).

In some embodiments, the non-combustible aerosol provision device (system) is a hybrid device (system) configured to generate aerosol using a combination of aerosol-generating materials, one or a plurality of which may be heated. Each of the aerosol-generating materials may be, for example, in the form of a solid, liquid or gel and may or may not contain nicotine. In some embodiments, the hybrid system comprises a liquid or gel aerosol-generating material and a solid aerosol-generating material. The solid aerosol-generating material may comprise, for example, tobacco or a non-tobacco product.

The aerosol provision device may receive an article comprising aerosol generating material for heating.

An "article" in this context is a component that includes or contains in use the aerosol generating material, which is heated to volatilise the aerosol generating material, and optionally other components in use. The article may be referred to herein as a "consumable". A user may insert the article into the aerosol provision device before it is heated to produce an aerosol, which the user subsequently inhales. The article may be, for example, of a predetermined or specific size that is configured to be placed within a heating chamber of the device which is sized to receive the article. Aerosol provision systems comprising a device configured to receive an article may be generally referred to as two-piece aerosol provision systems.

In some embodiments, the article (consumable) for use with the aerosol provision device may comprise aerosol-generating material, an aerosol-generating material storage area, an aerosol-generating material transfer component, an aerosol generator, an aerosol generation area, a housing, a wrapper, a filter, a mouthpiece, and/or an aerosol-modifying agent.

For example, the article may comprise an aerosol-generating material which is a solid or a gel. In this case, the consumable may be in a rod format, which may also interchangeably be referred to as a "stick" format, and which may have a cylindrical shape. Such consumables may comprise any of a filter, cooling element and mouthpiece. A wrapper, may at least partially surround components of the consumable. The wrapper may comprise a paper layer, and/or a non-combustible layer (e.g. a layer which is resistant to combustion) such as a metallic foil. Suitably, the wrapper may comprise an aluminium foil layer.

Alternatively, the consumable may be provided in a differently shaped format such as a planar format, with the aerosol generating material provided on a support to form a substrate. The support may, for example, be or comprise paper, card, paperboard, cardboard, reconstituted material, a plastics material, a ceramic material, a composite material, glass, a metal, or a metal alloy.

In arrangements where the aerosol generating material is a liquid, an article (consumable) may comprise a reservoir for storing the aerosol generating material (the consumable being referred to in this case as a "cartridge").

Embodiments are also envisaged in which the aerosol provision device itself comprises (contains) aerosol generating material (and is not configured to receive a removable article). For example, in the case of a liquid aerosol generating material, the device may comprise a reservoir for storing the liquid. It would equally be possible configure the provide to store (provide the device) with other types of aerosol generating material, for example gel, solid or amorphous solid (for example such as described above).

Such a device, which itself comprises the aerosol generating material may be referred to as a "one-piece" device (and likewise, when the aerosol generating material is present, a one-piece system). The (one-piece) device may be configured to be refillable (and so re-usable), such that when at least a portion of the (initial) aerosol generating material of the aerosol provision device is exhausted, it can be refilled (replaced) with (new) aerosol generating material. Alternatively, the (one-piece) device may be disposable, for example being configured to be disposed of once the aerosol generating material has been exhausted (for example, after a predetermined number of inhalations), and so may not configured to be refillable by a user.

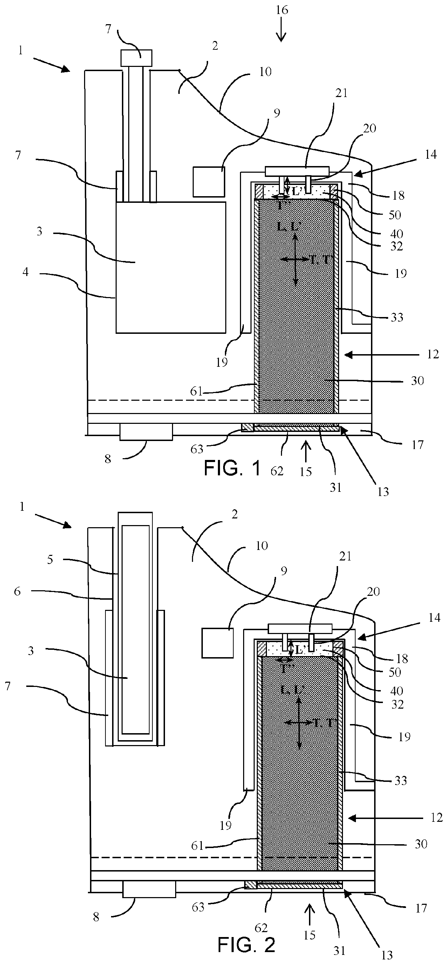

For example, Fig. 1 and Figs. 3 to 7B show embodiments of an aerosol provision device (and system) of the form having a reservoir for storing aerosol generating material (a one-piece device) which may comprise a liquid material. However, it would equally be possible for the aerosol provision device to receive an article, for example as illustrated in Fig. 2. In this regard, the scope of the present disclosure extends to any suitable and desired form of aerosol generating device (and aerosol generating system, and aerosol generating material), for example such as described above.

The present disclosure may be embodied as an aerosol generating device (and system) comprising any of the usual features, for example an area for receiving a consumable or otherwise receiving aerosol generating material (for example a reservoir), an aerosol generator configured to generate aerosol from the aerosol generating material (for example a heating assembly), a housing, a mouthpiece (through which the user can draw aerosol that has been generated from the aerosol generating material), a filter and/or an aerosol-modifying agent.

The heating assembly may be any suitable and desired heating assembly, arranged to heat the aerosol generating material, for example by resistive heating (with heat generated by passing electrical current through a heating element), inductive heating (heat generated by causing a magnetic field, for example generated by passing electrical current through a coil, to penetrate a susceptor material), radiative heating (for example using electromagnetic radiation, such as infrared radiation or microwave radiation, or sonic radiation, such as ultrasonic radiation). The heating assembly may be provided within the aerosol generating device (and configured to heat the aerosol generating material received in the aerosol generating device. Alternatively or additionally, in the case of a system comprising an article, the heating assembly may be provided (at least partially) with (within) an article (consumable).

In the case of an aerosol generating material which is a liquid, a transfer arrangement (e.g. a wick or porous element) may be provided to deliver aerosol generating material from a reservoir to a heating element. The transfer arrangement may have one or more parts located inside the reservoir, or otherwise be in fluid communication with the aerosol generating material in the reservoir, so as to be able to absorb aerosol generating material and transfer it, e.g. by wicking or capillary action, to other parts of the transfer arrangement that are adjacent or in contact with the heating element. This aerosol generating material is thereby heated and vaporised, to be replaced by new aerosol generating material from the reservoir for transfer to the heating element by the wick transfer arrangement. The transfer arrangement may be thought of as a conduit between the reservoir and the heating element that transfers aerosol generating material from the reservoir to the heating element.

The aerosol generating device (system) may comprise one or more input components for receiving inputs from a user. The one or more input components may comprise a button (such as a rolling button), a switch, a dial, a microphone, a camera, an accelerometer, a touchscreen, or any plurality or combination thereof. The one or more input components may be assigned to functions such as switching the aerosol provision device on and off, and selecting an operating mode of the aerosol provision system.

The aerosol generating device may comprise one or more sensors for detecting one or more properties relating to the aerosol provision system (e.g. the aerosol provision device thereof). The one or more sensors may comprise a puff sensor configured to detect a user inhalation on the aerosol provision system, and/or a temperature sensor configured to detect a temperature relating to the aerosol provision system (e.g. the temperature of the heating assembly, the heating element, the consumable, the aerosol generating material, the environment surrounding the aerosol provision system). Other sensors could alternatively or additionally be provided such as a consumable detection sensor configured to detect when a consumable has been engaged with the aerosol provision device (e.g. at least partly received by the aerosol provision device), a consumable identification sensor configured to detect a property of a consumable (e.g. a property of the aerosol generating material of a consumable), a biometric sensor configured to detect a biometric property relating to the user (e.g. a fingerprint, a heart rate, a breathing property), or any other suitable and desired sensor.

The aerosol generating device may comprise one or more output components for providing outputs to a user. The one or more output components may comprise a light (such as an LED), a speaker, a haptic component, a display (such as a screen), or any plurality or combination thereof.

The aerosol generating device may comprise a controller (control circuitry) for performing any of receiving (and processing) inputs from a user (from one or more input components), receiving (and processing) data from one or more sensors, providing outputs to a user (via one or more output components), and controlling provision of power to the heating assembly.

The aerosol generating device may comprise one or more components for wirelessly communicating with an external device (for example, a mobile phone, computer, remote server). This may comprise a wireless communication module, for example comprising a Bluetooth module (e.g. a Bluetooth Low Energy module), a ZigBee module, a WiFi module (e.g. a Wifi Direct module), a 2G module, a 3G module, a 4G module, a 5G module, an LTE module, an NFC module, an RFID module, an optical communication module configured to communicate data using optical signals, an audio communication module configured to communicate data using audio signals, or other wireless communication module. In such embodiments, the controller may control the sending of data to an external device, and receive (and process) data received from an external device.

In aspects of the present disclosure, the aerosol provision device comprises a power source.

In embodiments, the power source is an electrical power source (for example a battery). The power source may be provided for (the aerosol provision device may be configured to transmit power from the power source for) electrically powering at least one component of the aerosol provision device.

In particular, in aspects of the present disclosure, both a power source and a support are provided, the support configured to retain an electrical connector of the aerosol provision device in electrical connection with the power source (to thereby facilitate the powering of one or more components of the aerosol provision device by the power source). Embodiments for such configurations are described in more detail below.

It is noted that (in addition to the power source described herein) other power sources may also be provided, if desired. For example, an exothermic power source may be provided which provides power in the form of heat (for example when a carbon substrate of the power source is energized). Such a power source may be used to directly heat an aerosol-generating material or to a heat transfer material in proximity to the exothermic power source.

The embodiments of the present disclosure may be used in conjunction with any suitable and desired form of aerosol provision device and system (for example, having any of the features described herein).

Figs. 1 and 2 each show a schematic representation of an aerosol provision system (hereinafter "system") 1, in accordance with embodiments of the present invention. The system 1 may be a non-combustible aerosol provision system, for generating an aerosol from an aerosol generating material 3.

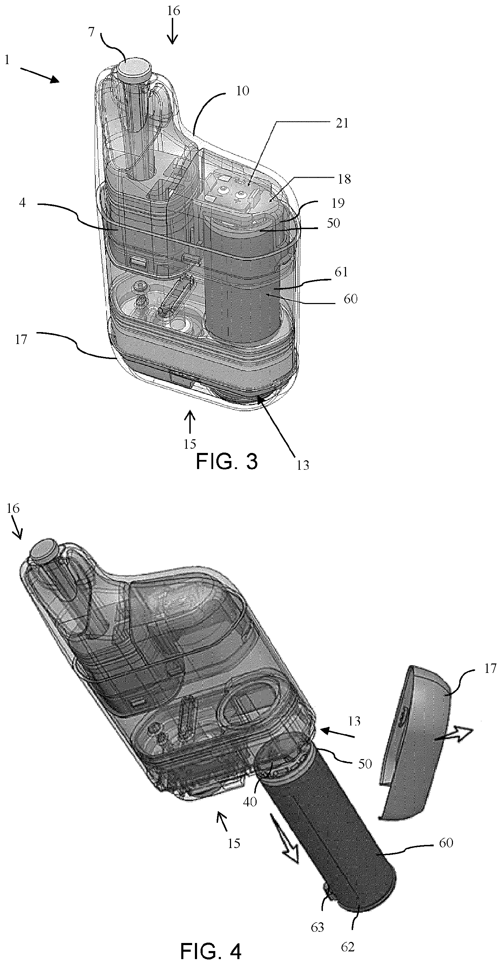

Fig. 3 shows in more detail a possible configuration for various components of an aerosol provision system 1 in an embodiment of the present disclosure. In Fig. 3, the outer housing 10 of the system is shown as transparent to allow the internal components of the device to be seen, however it will be understood that the housing 10 may be opaque in practice.

The system 1 comprises an aerosol provision device (hereinafter "device") 2, and aerosol generating material 3. The device 2 may be a non-combustible aerosol provision device 2, for example having any of the features described above. The aerosol generating material 3 may be in solid, liquid and/or gel form.

In embodiments, the device 2 is configured to itself contain the aerosol generating material 3 (is a "one-piece" device/system, for example having any of the features described above), for example as illustrated in Fig. 1. In embodiments, the device comprises (within a housing 10 which forms the device 2) a reservoir 4 for holding (containing) the aerosol generating material 3, for example for holding aerosol generating material which is liquid.

Alternatively, it would be possible for the aerosol generating material 3 to form part of an article 5 which is received by the device 2, for example as illustrated in Fig. 2. Such embodiments can be considered to form a "two-piece" system, for example having any of the features described above. The device 2 may be configured to receive the article 5 in an article receiving portion 6 of the device 2, which may be at least partially defined by the housing 10, or a component attached thereto or inserted therein. The aerosol generating material 3 provided in the article 5 may be in solid, liquid and/or gel form within the article 5.

In embodiments, the device 2 is disposable, for example being configured to be disposed of once the aerosol generating material 3 has been exhausted. Thus, in embodiments the device 2 comprises a reservoir 4 storing aerosol generating material 3 which is not configured to be refillable by a user. In embodiments (as will be discussed in more detail below), the power source 30 of the disposable device is removable from the device 2, for safe disposal or recycling.

Alternatively, the device 2 could be configured to be re-usable. For example, the reservoir 4 containing aerosol generating material may be refillable by a user, or the device 2 could be configured to receive successive articles 5 containing aerosol generating material. In such embodiments, the power source 30 may (still) be removable from the device 2 for safe disposal or recycling (when a user finally wishes to dispose of the device 2). Equally, the power source 30 could be removable for the purpose of recharging (for example, in the case of a rechargeable battery).

The device 2 will typically comprise a heating arrangement 7 for heating the aerosol generating material 3. The heating arrangement may be configured in any suitable and desired way.

The heating arrangement 7 may comprise, for example, a resistive heating arrangement or an inductive heating arrangement.

In embodiments, the device 2 (itself) comprises a heating arrangement. This may be the case, for example, for a device 2 which itself comprises the aerosol generating material 3 (such as shown in Fig. 1). The heating arrangement 7 may be provided within or adjacent a reservoir 4 containing the aerosol generating material 3, for example to heat aerosol generating material within the reservoir or to heat aerosol generating material as it is transferred (e.g. wicked) past the heating element. The heating arrangement may comprise one or more resistive heating elements, or in the case of an inductive heating arrangement a magnetic field generator (e.g. a coil through which current is passed) and a susceptor (which is heated by the magnetic field).

For a device 2 configured to receive an article (such as shown in Fig. 2) the heating arrangement 7 may comprise one or more resistive heating elements in proximity to the article receiving portion 6, which are configured to heat the article 5 when it is received in the article receiving portion 6. Alternatively, the heating arrangement 7 may be at least partly provided in the article 5 (for example, with the article comprising a susceptor which is heated by a magnetic field generated by the article, or the article itself comprising one or more resistive heating elements).

Other heating arrangements would be possible.

The device may comprise one or more input components for receiving inputs from a user. For example, Figs. 1, 2 and 5 show a dial 8, which may be used for selecting an operating mode of the device. Other input components would also be possible, such as any of a button, a switch, a microphone, a camera, an accelerometer, a touchscreen, or any plurality or combination thereof. The one or more input components may be assigned to functions such as switching the aerosol provision device on and off, and selecting an operating mode of the aerosol provision system.

Although not shown in the figures, the device may comprise one or more output components for providing outputs to a user, for example and of a light, a speaker, a haptic component, or display. Although not shown in the figures, the device may comprise one or more sensors (for example as described above). Although not shown in the figures, the device may comprise one or more components for wireless communication.

The device may also comprise a controller (control circuitry) 9 which may be operably coupled to one or more (other) components of the device. For example, the controller may be configured to perform any of receiving (and processing) inputs from one or more input components 8, receiving (and processing) data from one or more sensors, controlling output provided by one or more output components, and controlling provision of power to the heating assembly 7.

For ease of illustration, the connection between the controller 9 and the other components of the device are not shown in the figures, but it will be appreciated these may be connected in any suitable and desired way.

The device 2 may comprise a housing 10 (an outer housing) (sometimes referred to as a body) which houses (encloses) various parts of the device 2, for example such as any of the controller 9, heating assembly 7, the reservoir 4 containing liquid aerosol generating material 3. The housing may be formed of any suitable material, for example a plastic material or a metal.

In embodiments, the device 2 is a handheld electronic vapour device, meaning that the housing 10 is dimensioned and configured to be held in the hand of a user. In other words, in embodiments, the device is portable.

The device 2 may comprise a mouthpiece 7 through which the user can draw aerosol that has been generated from the aerosol generating material 3.

In accordance with aspects of the present disclosure, the aerosol provision device 2 comprises (in embodiments is configured to receive) a power source 30 (an electric power source) for electrically powering one or more components of the aerosol provision device. In other words, the power source is configured to supply electrical power for consumption by at least one electrical component of the device 2.

The one or more components which are powered by the power source 30 may comprise any suitable and desired (electrical) components of the device 2, such as any of one or more input components 8, one or more output components, one or more components for wireless communication, the heating arrangement 7 and the controller 9.

In embodiments where the device 2 is configured to receive an article 5, the power source 30 may (also) power (the device may be configured so that the power source 30 powers) one or more components of the article 5.

In embodiments the power source 30 powers (at least) a heating arrangement 7 of the device and/or article.

In embodiments, the power source 30 is a battery. The battery may be non-rechargeable or may be rechargeable battery.

Examples of suitable batteries include, for example, a lithium battery (such as a lithium-ion battery), a nickel battery (such as a nickel-cadmium battery), and an alkaline battery.

In embodiments, the aerosol provision device 2 comprises a power source accommodating portion 12 (a power source receiving portion) (cavity) in which the power source 30 is provided (can be received).

In embodiments, when the aerosol provision device 2 is provided with the power source (battery), no part of the power source (battery) extends outside of the (housing 10 of) aerosol provision device 2. In other words, the power source 30 may be provided (received) entirely within the aerosol provision device 2.

The power source (thus) forms an internal (and not an external) power source for the aerosol provision device. Thus, in embodiments, the power source is provided as part of (receivable within) a hand-held aerosol provision device.

In embodiments, the aerosol provision device does not comprise a charging interface for receiving power from an external power source.

In embodiments, the power source 30 is removable from the aerosol provision device (is a removable power source). Thus, the power source 30 may be receivable within the device 2, and removable from the device 2. For example, the power source may be removable for the purpose of safe disposal (for example, when disposing the aerosol provision device), or for replacement or recharging (in the case of a re-usable aerosol provision device). The power source in such cases is removable without damaging the power source.

In embodiments, the device 2 (the power source accommodating portion 12 thereof) comprises an opening 13 into which the power source 30 is received (inserted) (and through which the power source can be removed). The power source may be inserted through the opening 13 towards a distal end 14 of the power source accommodating portion 12. Thus, the power source accommodating portion 12 may be defined between (extend between) the opening 13 and a distal end 14.

In embodiments, the power source 30 is insertable and/or removable from a bottom side 15 of the device 2 (for example as illustrated in Fig. 4). This may avoid conflict with other components of the device such as any of the mouthpiece 7, reservoir 4 or article receiving portion 6, heating arrangement 7. Thus, in embodiments, the opening 13 through which the power source 30 is inserted/removed is arranged towards a bottom end 15 of the device 2.

In this regard, the bottom side (end) 15 of the device 4 is the side (end) configured to face downwards (away from a user's mouth) in use, as compared to the upper side (end) 16 of the device 4 which faces upwards (towards the user's mouth) in use.

It would alternatively be possible to configure the device so that the power source 30 is insertable and/or removable from a side other than the bottom side 15, if desired.

In embodiments (in use), the opening 13 through which the power source 30 is inserted/removed is covered (at least partially, in embodiments entirely) by a portion 17 of the housing 10 of the device 2, in embodiments this portion 17 of the housing being removable for the purpose of accessing (inserting and/or removing) the power source 30.

In embodiments, the removable portion 17 of the housing 10 comprises at least part of (and in embodiments the entirety of) the bottom end 15 of the housing 10. Thus, in embodiments at least part of (in embodiments the entirety of) the bottom end of the device 2 is removable for the purpose of accessing the power source 30.

The power source 30 may have any suitable and desired shape, and any suitable and desired orientation when provided within the device 2.

In embodiments, the power source 30 has a substantially cylindrical or cuboidal shape (as may be typical, for example, for a battery). The power source 30 may extend along a length (along its longitudinal direction L) between first and second longitudinal ends (longitudinally spaced ends) 31, 32, and may have a circular or square cross-sectional shape (extending in its transverse direction T). The power source 30 may be elongate, in the sense that it has a length dimension (measured in the longitudinal direction L) which is greater than a transverse dimension (measured in the transverse direction T).

In embodiments, the power source 30 is inserted into the device 2 along its longitudinal direction L (with a longitudinal end 32 of the power source being first inserted, followed by the rest of the power source 30). Thus, in embodiments, the power source accommodating portion 12 of the device 2 is configured to receive the power source 30 inserted along its longitudinal direction L.

In embodiments, the power source accommodating portion 12 has a longitudinal direction L' and a transverse direction T', which in embodiments coincide with the longitudinal direction L and transverse direction T of the power source 20. The power source accommodating portion 12 in embodiments has a length and transverse dimension sufficient to accommodate (in embodiments entirely) the power source 30.

The power source accommodating portion 12 may comprise a power source holding means (holder) 18 for holding the power source 30 in a desired position and/or orientation when received. For example, the holding means 18 may be at (or towards) the distal end 14 of the power source accommodating portion 12, for holding the power source 30 when it is (entirely) inserted (the distal end 14 being the opposite end of the accommodating portion 12 compared to its opening 13).

In the example shown in the figures, the holding means 18 comprises a pair of arms 19 to hold (grip) at least part of the power source 30 towards its distal end when inserted. However other configurations for a holding means 18 could be used if desired (for example having fewer or more arms, or comprising a cylindrical or cuboidal sleeve into which the power source is inserted, or other suitable and desired configurations).

In use, when the power source 30 is provided, the power source 30 provides power to one or more components of the aerosol provision device 2, via one or more electrical connectors 20 (of the device 2). Thus, in embodiments, the device 2 comprises one or more electrical connectors 20 for electrically connecting to the power source 30. The electrical connector(s) 20 may be of any suitable and desired form.

In embodiments, two electrical connectors 20 are provided. In this case, a first electrical connector may form a positive connection with the power source 30, and a second electrical connector may form a negative connection with the power source 30. Alternatively, it would be possible to provide a different number of electrical connectors if desired.

In embodiments, the (each) electrical connector 20 protrudes into the power source receiving portion 12 of the device 2, for electrically connecting to the power source 30. In embodiments, the (each) electrical connector is formed (at least partially, in embodiments entirely) of an electrically conductive material, such as metal.

In embodiments, the (each) electrical connector 20 has a longitudinal extent, and so extends (protrudes) along its length (along its longitudinal direction L"). Example such electrical connectors pin-type (pin) connectors and thimble connectors. In embodiments the electrical connector has transverse extent (in its transverse direction T") corresponding to a substantially circular cross-sectional shape, however other cross-sectional shapes could be used if desired (for example polygonal, square, rectangular, star-shaped, etc.).

It would be possible for the (each) electrical connector 20 to be adjustable (moveable) in its longitudinal (length) direction L". For example, the (each) electrical connector 20 could have a (resiliently) adjustable longitudinal extent, for example having an adjustable length, for example being extendible and/or retractable, for example being spring loaded. An example of such an electrical connector is a pogo pin connector. Such configurations may provide tolerance to assist with obtaining a good electrical connection to the power source. However, in accordance with the present disclosure, such adjustable connectors are not necessary, since (as will be discussed in more detail below) in the present disclosure a support is provided for supporting the electrical connector(s) and retaining the electrical connector(s) in electrical connection with the power source, this support in embodiments providing longitudinal and/or transverse tolerances for the electrical connection.

In embodiments the (each) electrical connector 20 is rigid (and does not have an adjustable longitudinal and/or transverse extent).

The (each) electrical connector 20 may be provided within the device 2 in any suitable and desired configuration, so as to permit electrical connection with the power source.

In embodiments, the (each) electrical connector 20 is rigidly mounted in the device 2 (and not moveable in its longitudinal direction L" and/or transverse direction T").

In embodiments, the electrical connector(s) 20 (in embodiments both, in embodiments all electrical connectors 20) are provided towards (in embodiments at) the distal end 14 of the power source receiving portion 12, in embodiments so that the power source 20 forms an electrical connection with the electrical connector(s) 20 (only) when it is substantially fully inserted into the power source receiving portion 12. In this regard, there may be no electrical connector(s) for connecting to the power source 30 near the opening 13.

In embodiments, all electrical connector(s) 20 are (thus) positioned so as to be at (near) a (single) longitudinal end 32 of the power source.

In embodiments the electrical connector(s) 20 extend (protrude) into the power source receiving portion 12. In embodiments the electrical connector(s) extend (protrude) substantially along the longitudinal direction L of the power source receiving portion 12.

In embodiments, the longitudinal direction L" of the electrical connector(s) (along which the electrical connector(s) extend) is substantially the same as the longitudinal direction L' of the power source receiving portion 12 and/or the longitudinal direction L of the power source 30. In embodiments, the transverse direction T" of the electrical connector(s) is substantially the same as the transverse direction T' of the power source receiving portion 12 and/or the transverse direction T of the power source 30.

The electrical connector(s) may be provided in the device 2 in any suitable and desired way. For example, the electrical connector(s) 20 may be provided (mounted) on one or more printed circuit boards (PCBs) 21 (in embodiments both being provided on a same PCB). The PCB(s) may then provide a connection to one or more components of the device 2 which are to be powered by the power source 30.

The applicant has recognized that reliable electrical connection between a power source and electrical connectors of an aerosol provision device is important for reliable functioning of the aerosol provision device. This may be particularly the case for devices in which the power source is configured to be removed, but also applies to devices with power sources that are not removable.

In this regard, in the present disclosure, in addition to the power source 30 and electrical connector(s) 20, a support 40 is provided for supporting the electrical connector(s) 20, the support configured to retain the electrical connector(s) 20 in electrical connection with the power source 30. The applicant has recognised that by providing such as support, reliable electrical connection can be achieved.

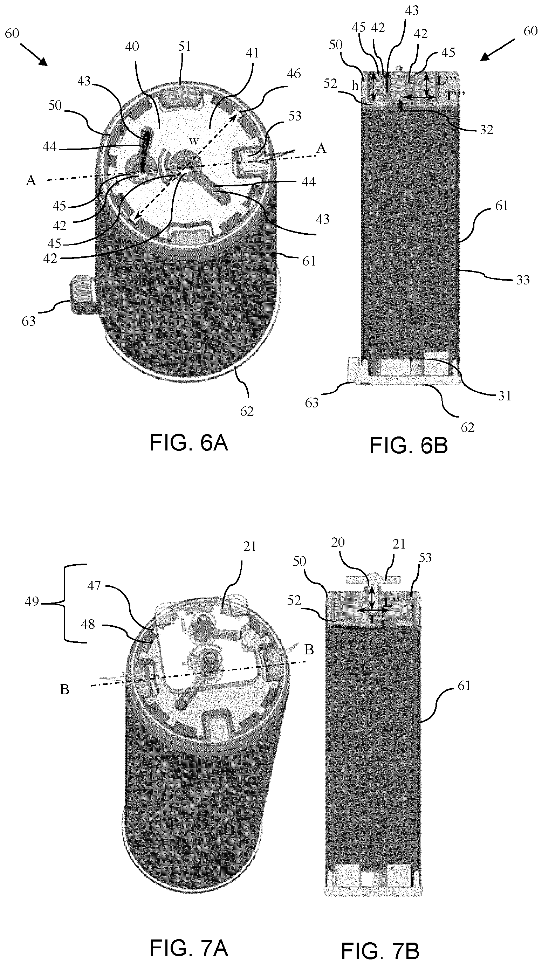

Figs. 1 and 2 show illustratively, for an example embodiment, the position of the support 40 relative to the power source 30 and electrical connector(s) 20. Figs. 6A and 6B show in more detail embodiments for the shape and configuration of the support 40 relative to the power source 30, and Figs. 7A and 7B show a configuration and position for the electrical connector(s) 20 when retained in electrical connection with the power source 30.

The support 40 is in embodiments configured (provided) (only) at (adjacent) a (single) longitudinal end 32 of the power source 30. In embodiments the support does not extend longitudinally along any part of the power source (does not extend along any longitudinal side 33 of the power source). In embodiments, the support 40 is provided at the longitudinal end 32 of the power source which is (first) inserted into the device 2 and which, in use, is adjacent the distal end 14 of the power source receiving portion 12 of the device.

The support in embodiments has a transverse extent which spans at least part of (in embodiments at least 50% of, in embodiments at least 70% of, in embodiments at least 80% of, in embodiments substantially the entire of) a transverse dimension of the longitudinal end 32 of the power source.

The support 40 may (thus) be sized and/or shaped to be provided at a (longitudinal) end 32 of the power source 30. In embodiments, the support does not extend transversely beyond the limits of (the outer perimeter of) the end 32 of the power source.

The support 40 may be substantially planar in shape (aside from, for example any recesses or protrusions in its planar surface, for example for receiving or otherwise contacting the electrical connector(s) 20 or other wiring or other holding means 50 for holding the support in position, for example as discussed in more detail below). In this regard, the support 40 may substantially not be curved (for example not be dog-legged, or parabolic) in shape.

In embodiments, at least one side, for example at least the bottom side of the support 40 (which lies adjacent, and faces, the power source), is substantially flat.

The support may have a transverse direction T‴, and a longitudinal direction L‴, which may correspond with the transverse direction T, T', T‴ and longitudinal direction L, L', L" of the power source 30 and/or the power source receiving portion 12 and/or the electrical connector(s) 20.

In embodiments, a (maximum) transverse dimension (width, w) of the support 40 (in the direction T‴, thus in the direction of the plane of the support 40) is greater than a (maximum) longitudinal dimension (height, h) of the support 40 (in the longitudinal direction L‴). Thus, in embodiments the support 40 extends primarily in its transverse T‴ direction.

In embodiments, the (maximum) transverse dimension (width, w) of the support is from about 10 mm to about 20 mm. In embodiments, the (maximum) longitudinal dimension (height, h) of the support is from about 1 mm to about 10 mm.

As noted above, the power source 30 may have a cylindrical or cuboidal shape, with a substantially circular or rectangular shaped longitudinal end 32. In this case, at least a portion of the support 40 (for example at least a central portion 41) may have a circular or rectangular shape, so as to at least partially match the shape of the longitudinal end of the power source 30.

In embodiments, at least the central portion 41 of the support 40 is substantially planar. In embodiments, the entire support 40 is substantially planar.

The support 40 is in embodiments configured to receive the electrical connector(s) 20, to assist with retaining the electrical connector(s) in electrical connection with the power source 30.

In embodiments, the support 40 comprises one or more recesses 42 for receiving (configured to receive) the electrical connector(s) 20. In such embodiments, in use, the electrical connector(s) protrude into the recesses 42 (and are supported within the recesses 42 by the surrounding material of the support 40).

In embodiments, a respective recess 42 is provided for receiving each electrical connector 20 (so that, in embodiments two recesses 42 are provided for the first and second electrical connector(s) 20 respectively).

Alternatively, it would be possible to provide a single recess 42 for receiving both electrical connectors 20.

In embodiments, the (each) recess 42 has a shape which (at least for part of the longitudinal extent (height) of the recess) substantially corresponds to the shape of the (outer periphery of the) electrical connector 20 which it is to receive (for example, having a circular cross section, in the case of an electrical connector with a circular cross-sectional shape).

In embodiments, each recess 42 contacts (and so supports) the electrical connector 20 about substantially its entire transverse periphery (along at least part of the length (longitudinal direction L") of the electrical connector).

Alternatively, it would be possible to shape the recess 42 so that it does not exactly match (correspond to) the shape of the (outer periphery of the) electrical contact. In this way, the recess may contact (and support) (only) part of (and not the entirety of) the transverse periphery of the electrical contact 20. This may still provide adequate support for the electrical contact.

In embodiments, the support 50 is configured to contact at least part of (the transverse periphery of) the electrical connector(s), to support the electrical connector(s) against transverse movement.

In embodiments, the recess 42 (either or both recesses 42) extends through part of (but not the entirety of) the support 20 (in its longitudinal direction L"). In other words, the recess extends partially, but not fully, through the thickness (height, h) of the support. Thus, in embodiments, the recess 42 does not form a through-hole in the support 20. Alternatively, provision of a through-hole as the recess 42 is possible if desired.

In embodiments, to facilitate (and provide tolerance during) insertion of the electrical connector(s) 20 into the recess(es) 42, the (each) recess 42 has a tapered opening 44, which widens towards the entrance to the recess. Thus, in embodiments, the opening 44 to the recess 40 is larger than the (transverse) size of the electrical connector 20 which it receives.

In embodiments one or more (or all) of the electrical connectors 20 are supported within a (respective) recess 42 of the support 20, but do not directly contact the power source. In embodiments, a further electrical connector 43 (for example a wire) is provided within the (each) recess 42 and electrically contacts the power source.

The provision of further electrical connector(s) 43 (e.g. wire(s)) may facilitate connection with both the positive and negative terminals respectively of the power source 30 in the case that the positive and negative terminals are at opposite ends of the power source 30 (as is the case for example for a battery). In this regard, in an embodiment, in a first recess 42 a first further electrical connector (wire) 43 is provided which electrically contacts a positive terminal of the power source 30, and in a second recess 42 a second further electrical connector (wire) 43 is provided which electrically contacts a positive terminal of the power source.

The support 40 may be configured so that the further electrical connector(s) 43 (e.g. wire(s)) are at least partially held within the support 40. For example, the support may comprise one or more further recesses 44 in which the further electrical connectors(s) 43 (wires) are provided. This may provide a compact design.

In embodiments, the support 40 is not electrically conductive, and so does not itself conduct electrical energy between the electrical connector(s) 20 to the power source (20). In embodiments, the support is formed substantially entirely of material which is not electrically conductive (is electrically insulating).

In embodiments, the support 40 is moveable and/or deformable in relative to the electrical connector(s) 20. This can assist with providing tolerance for the electrical connection between the electrical connector(s) and the power source 30.

In embodiments, the support 40 is moveable and/or deformable (at least) transversely, relative to the (extent of) the electrical connector(s) 20. Thus, in embodiments, the support 40 is moveable and/or deformable (at least) in its transverse direction T‴ (in embodiments, being moveable and/or deformable at least in the transverse direction T, T', T" of the power source 30 and/or power source receiving portion 12 and/or electrical connector(s) 20).

In embodiments, the support is formed at least partially of a resilient material. In this regard, a resilient material is a material configured to deform and to return at least partially (and in embodiments substantially) to its original shape. In embodiments the resilient material comprises one or more of: silicon, and rubber.

In embodiments, (for example as illustrated in the figures), the entire support 40 is formed of a resilient material. For example, and in embodiments, the entire support 40 may be formed (only) of a single (monolithic) piece of resilient material. This may provide a relatively inexpensive and simple configuration.

However, it would equally be possible to form part (but not all) of the support 40 of a resilient material. Thus, in embodiments the support comprises both a resilient material, and a non-resilient (rigid) material (for example such as a plastic, ceramic, resin, metal or other material).

For example, it would be possible to form the central portion 41 of the support of a non-resilient (rigid) material, and to form portion(s) (for example the remainder of) the support 40 peripherally outwards of the central portion 41 of a resilient material. Alternatively it would, for example, be possible to form the central portion 41 of a resilient material, and to form portion(s) (for example the remainder of) the support 40 peripherally outwards of the central portion 41 of a non-resilient (rigid) material.

In embodiments, one or more portions of the support 40 are formed of a resilient material, for example one or more or all of: a portion of the support forming the recess(es) 42; a portion of the support adjacent (but not necessarily forming) the recess(es) 42; a central portion 41 of the support 40; and a portion of the support forming at least part of a (transversely outermost) periphery 46 of the support.

In embodiments, the support 40 comprises one or more deformable elements 49, the deformable element(s) configured to assist the support with deforming, preferably to assist the support with deforming transversely (in its transverse direction T‴).

In embodiments the deformable element(s) 49 are formed of resilient material (for example being formed in, or corresponding to, resilient material of the support 40).

For example, in embodiments where at least part of the central portion 41 of the support 40 is formed of a non-resilient material, and a portion of the support peripherally outwards (for example at the periphery of the support) is formed of a resilient material (or for example, material at the periphery of the support is more resilient than elsewhere in the support), then the (more) resilient material may be considered to form a deformable element 49 of the support.

In embodiments, the deformable element(s) 49 are provided at (or near) a (transverse) periphery 46 of the support 40.

In this regard, in embodiments, the support 40 is more deformable at (near) its periphery 46 than at (near) its centre.

This could be configured in any suitable and desired way. For example, deformable element(s) comprising one or more indents 48 and/or protrusions 47 could be provided at the periphery of the support. Alternatively or additionally, a deformable element comprising a different material which is more resilient could be provided at (near) the periphery 46 of the support (as compared to a material provided nearer to the centre of the support 40). Alternatively, or additionally, a deformable element may be provided by providing material which is thinner at (towards) the periphery 46 of the support compared to material at (towards) the centre of the support 40.

In embodiments, the deformable element(s) comprise one or more indents 48 (e.g. notches) and/or protrusions 47 (e.g. teeth) at the periphery 46 of the support 40.

In embodiments, the indent(s) 48 and/or protrusion(s) 47 each extend substantially throughout the entire height h (the entire longitudinal dimension L‴) of the support 40. However, it would alternatively be possible to provide indent(s) and/or protrusion(s) which extend only partially (and not fully) the height of the support 40.

The indent(s) 48 and/or protrusion(s) 47 may have any suitable and desired shape. For example, and in embodiments, the indent(s) and/or protrusion(s) may have a substantially rectangular shape (when viewed from the top or bottom of the support 40) (may form respective rectangular teeth). In such embodiments, a support 40 provided with a plurality of indent(s) and/or protrusion(s) may form a cog-wheel shape (for example, as shown in Figs. 6A and 6B).

Other shapes for the indent(s) and/or protrusion(s) would alternatively or additionally be possible, for example such as triangular, polygonal, curved or the like.

For example, it would be possible to provide the support 40 with an undulating, wave-like or zig-zag, pattern of indents 48 and protrusions 47.

In embodiments, the deformable element(s) 49 comprise a pattern of plural indents 48 and/or plural protrusions 47 spaced about the periphery 46 of the support 40.

Thus, in embodiments, the support 40 is patterned about its (transverse) periphery 46.

The plural indents 48 and/or plural protrusions 47 may be spaced substantially evenly about the periphery 46 of the support 40. This may assist with providing even deformation of the support 40 in any transverse direction.

In embodiments, the support 40 comprises at least two, or at least three, or at least four, or at least five indents 48. In embodiments, the support 40 comprises less than twenty, in embodiments, less than fifteen indents 48.

In embodiments, the support 40 comprises at least two, or at least three, or at least four, or at least five protrusions 47. In embodiments, the support 40 comprises less than twenty, in embodiments, less than fifteen protrusions 47.

For example, in the embodiment shown in the Figs. 6A and 6B, the support 40 comprises twelve indents 48 and twelve protrusions 47.

In embodiments, a dimension of a (each) indent 48 (the dimension being for example a width Wᵢ of the indent measured along the periphery 46) differs from a dimension of a (each) protrusion 47 (the dimension being for example a width Wₚ of the protrusion measured along the periphery 46).

In embodiments, the dimension (width Wᵢ) of the (each) indent 48 is greater than the dimension (width Wₚ) of the (each) protrusion 47. In other words, in embodiments, the dimension (width Wₚ) of the (each) protrusion 47 is less than the dimension (width Wᵢ) of the (each) indent 48.

In embodiments, the dimension (width Wₚ) of the (each) protrusion 47 is less than 50% of the dimension (width Wₚ) of the (each) indent 48, in embodiments less than 40% of the dimension (width Wₚ) of the (each) indent 48. Restricting the width of the protrusion(s) in this way may help to provide a good amount of deformability to the support 40.

In embodiments, the dimension (width Wₚ) of the (each) protrusion 47 is less than 25%, or less than 20%, or less than 15%, or less than 10% of the perimeter of the support 40 (or of the circumference of the outermost periphery of the support in the case of a substantially circular shape).

Whilst the deformable elements 49 described above comprise indents 48 and/or protrusions 47 at the periphery 46 of the support 40, it would alternatively or additionally be possible to provide deformable elements 49 within the body of the support 40 (away from its periphery 46).

Thus, in embodiments, one or more of the deformable elements 49 are provided within the body of the of the support 40 (away from its periphery 46). Such deformable element(s) 49 could have any suitable and desired shape, position, and configuration which allows transverse deformation of the support 40. For example, the deformable element(s) 49 may comprise recesses, through-holes, or cavities within the structure of the support. The deformable elements may have a substantially circular, square, or elongate shape, or other suitable and desired shape. The deformable element(s) 49 could be positioned towards the periphery 46 of the support 40, or towards the centre of the support 40 as desired.

It would be possible for the support 40 to sit directly on the power source 30 (without any other components provided between the support 40 and the power source 40, and for example without any component to hold the support 40 in position at the longitudinal end of the power source 30). However, in embodiments, a holder 50 is provided for holding the support 40 in position relative to the power source 30.

The holder 50 is in embodiments configured to restrict transverse and/or longitudinal movement of the support 40 (to restrict movement of the support 40 in the longitudinal direction L, L' or transverse direction T, T' of the power source 40 and/or of the power source receiving portion 12 of the device).

In embodiments, the holder 50 is formed of a non-resilient and non-flexible (rigid) material, for example such as plastic, resin, ceramic or the like. In embodiments, the holder is not electrically conductive.

In embodiments, the holder 50 extends about at least part of (in embodiments about the entirety of) a (transverse) periphery 46 of the support 40. For example, at least part of the holder 50 may form a circular or rectangular ring 51 around the periphery 46 of the support 30. This may assist with restricting movement of the support 40 in the transverse direction T of the power source 40.

In embodiments, the support 40 is configured such that at least part of its periphery 46 corresponding to one or more (or all) of the protrusion(s) 47 contacts the holder 50 (for example where the holder 50 peripherally surrounds the support 40). Additionally, at least part of the periphery 46 of the support 40 corresponding to one or more (at least some) of the indent(s) 48 does not contact the holder 50 (where the holder 50 peripherally surrounds the support). In this way, the support 40 may be free to deform about (from) the indent(s) 47.

Thus, in embodiments a (each) protrusion 47 at the periphery of the support 40 (peripherally) contacts the holder 50 for the support 40. In embodiments, one or more (at least some of the) indents 48 in the periphery of the support 40 do not (peripherally) contact the holder 50.

In embodiments, the holder 50 (also) extends at least partially above and/or below the support 30. In other words, the holder extends at least partially across a transverse (planar) surface of the support. This may assist with restricting out-of-plane (longitudinal, upwards and/or downwards) movement of the support 40.

In embodiments, at least a portion 52 of the holder 50 is provided between the support 30 and the power source 40.

In embodiments at least a portion 53 of the holder 50 is provided on the opposite side of the support 30 compared to the power source 40 (in use, on top of the support 40) to hold the support 30 against the power source 40 (and, for example to prevent the support 30 from falling off of the power source 40). This portion 53 may be configured, for example as one or more gripping elements, for example which extend transversely inwards from the ring 51 formed by the holder 50.

In embodiments, at least a portion 53 of the holder 50 grips the support to restrict out-of-plane (upwards and/or downwards) movement of the support.

Example configurations for the holder 50 can be seen in Figures 6A, 6B, 7A and 7B. Other configurations would also be possible.

As discussed above, the power source 30 may be removable from (and insertable into) the device 2, for example through an opening 13 into a power source accommodating portion 12.

In embodiments, the power source 30 and support 40 (and optionally the holder 50 in embodiments where it is provided) are all removable from (and insertable into) the device 2, for example through the opening 13 and into the power source accommodating portion 12 of the device, for example whist the removable covering 17 of the device 2 is removed.

It would be possible to configure the device 2 so that the power source 30 can be removed before or without removing the support 40 and/or holder 50. Similarly, it would be possible to configure the device 2 so that the power source 30 can be inserted into the device independently of the support 40 and/or holder 50 (for example, with the support 40 and/or holder 50 being provided in the device 2 before the power source 30).

However, in embodiments, the power source 30 and support 40 (and optionally the holder 50, in embodiments where it provided) are removable (and insertable) together as a removable (and insertable) power module 60 for the device.

By providing the power source 30 together with the support 40 (and optionally the holder 50, in embodiments where it provided), when inserting the power source 30 into the device, the support 40 can assist with receiving and supporting the electrical connectors 20 whilst allowing tolerances in the assembly, to retain the electrical connectors in electrical communication with the power source.

Fig. 4, for example, illustrates removal of a power module 60 from a device 2, by first removing the removable cover 17, and then removing the power module 60 through an opening 13 of the device. These actions may be performed in to reverse to insert the power module 60 into the device 2.

In this regard, in embodiments, the present disclosure comprises a power module 60 for an aerosol provision device 2, the power module 60 comprising the power source 30, the support 40 and optionally the holder 50 (in embodiments where it is provided), having any of the features described herein. For example, Figs. 6A and 6B show an example embodiment for the configuration of the power module 60.

The power module 60 is in embodiments insertable into and/or removable from the aerosol provision device (as a single module), for example, to allow the power source 30 to be disposed of.

The power module 60 may comprise (in addition to the power source 30, support 40, and optionally the holder 50), any other suitable and described components for facilitating insertion of the power source 30 into and/or removal of the power source 30 the device 2.

For example, and in embodiments, the power module 60 may comprise an outer casing 61 for the power source 30. The outer casing 61 may be provided to protect the power source 30 from damage. The outer casing 61 may extend over at least part of the surface of the power source 30, for example extending over at least the longitudinal sides 33 of the power source 30, for example completely surrounding the longitudinal sides 33 of the power source 30. For example, the outer casing 61 may comprise a circular or rectangular tube.

The power module 60 may (also) comprise a cover 62 for covering a longitudinal end 31 of the of the power source 30. The cover 62 may cover the (bottom) longitudinal end 31 of the power source 30 which is opposite (at the other end of the power source compared to) the support 40 (in other words, covering the longitudinal end of the power source 30 which is not provided with support 40).

The end cover 62 in embodiments comprises a fixing component 63, for fixing the power module 60 (power source 30) to the device 2 when the power module 60 (power source 30) is received in the device 2. Such a configuration may provide for straight-forward fixing of the power module within the device 2, and straight-forward unfixing and removal of the power module from the device 2.

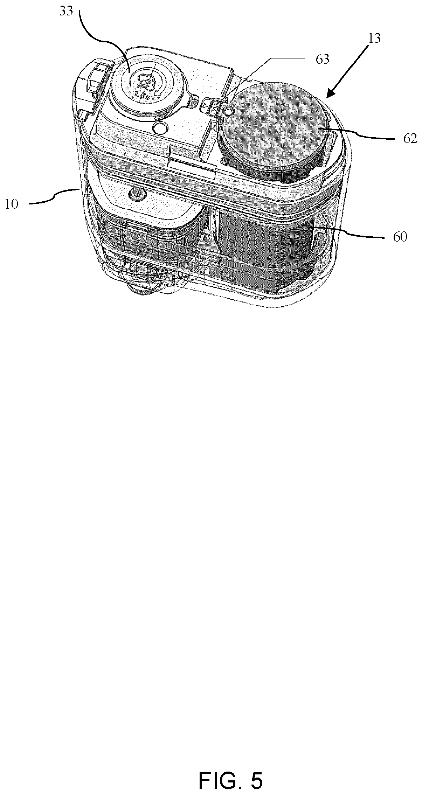

For example (as shown for example in Fig. 5), the bottom cover 62 of the power module 60 may comprise a fixing component 63 in the form of an extension which can be secured to or for example latched with the device 2.

The support 40 and/or holder 50 may form a top cover of the power module 60, covering (and protecting from damage) a top longitudinal end of the power source 30.

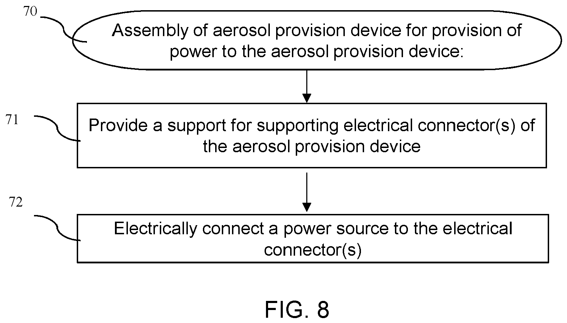

Fig. 8 is a flow chart showing method steps for assembling aerosol provision device in embodiments of the present disclosure.

The method comprises, when it is desired to assemble the device 2 (step 70), providing a support 40 for supporting the electrical connector(s) 20 of the device 2 (step 71), which in embodiments comprises receiving the electrical connector(s) 20 in the recess(es) 41 of the support 40. The method also comprises electrically connecting a power source 30 to the electrical connectors (step 72).

The device 2, support 40, and power source 30 may have any of the features described herein.

Method steps 71 and 72 could be performed in sequence (so that the support 40 is provided before, and separately to, the power source 30).

Alternatively, and in embodiments, method steps 71 and 72 may be performed at the same time (concurrently), so that the support 40 is provided at the same time as the power source 30 (for example by providing a power module 60 comprising the support 40 and power source 30).

In such embodiments, the power module is provided (inserted into the device) in an orientation for which the support 40 enters the device before the power source 30, and so the support 40 receives the electrical connector(s) 20 in its recess(es) 41 before the power source 30 electrically connects with the electrical connector(s) 20. In this way, the support 40 can help provide tolerance during insertion and allow a good electrical connection.

A holder 50 may also be provided between the support 40 and the power source 40, for holding the support 40 in position relative to the power source 30, for example having any of the features described herein. The holder 50 in embodiments also forms part of the power module 60.

The power module 60 may have any of the features described herein.

The various embodiments described herein are presented only to assist in understanding and teaching the claimed features. These embodiments are provided as a representative sample of embodiments only, and are not exhaustive and/or exclusive. It is to be understood that advantages, embodiments, examples, functions, features, structures, and/or other aspects described herein are not to be considered limitations on the scope of the invention as defined by the claims or limitations on equivalents to the claims, and that other embodiments may be utilised and modifications may be made without departing from the scope of the claimed invention. Various embodiments of the invention may suitably comprise, consist of, or consist essentially of, appropriate combinations of the disclosed elements, components, features, parts, steps, means, etc, other than those specifically described herein. In addition, this disclosure may include other inventions not presently claimed, but which may be claimed in future.

## Claims

1. An aerosol provision device (2) for generating aerosol from an aerosol-generating material, the aerosol provision device comprising:
a power source (30) for powering one or more components of the aerosol provision device (2);
an electrical connector (20) for electrically connecting to the power source (30); and
a support (40) supporting the electrical connector (20), the support (40) configured to retain the electrical connector in electrical connection with the power source (30).

2. The aerosol provision device of claim 1, wherein the support (40) is moveable and/or deformable transversely relative to the electrical connector.

3. The aerosol provision device of claim 1 or claim 2, wherein the support (40) is formed at least partially of a resilient material.

4. The aerosol provision device of any preceding claim, wherein the support (40) is formed of an electrically insulating material.

5. The aerosol provision device of any preceding claim, wherein the support (40) comprises a recess (42) for receiving the electrical connector (20).

6. The aerosol provision device of claim 5, wherein the recess (42) has a tapered opening (44).

7. The aerosol provision device of any preceding claim, wherein the support (40) comprises one or more deformable elements.

8. The aerosol provision device of claim 7, wherein the one or more deformable elements comprises a pattern of one or more indents and/or protrusions at a periphery of the support.

9. The aerosol provision device of any preceding claim, wherein the support (40) is held by a holder (50) configured to restrict movement of the support.

10. The aerosol provision device of any preceding claim, wherein the support (40) is provided adjacent an end (32) of the power source (30).

11. The aerosol provision device of any preceding claim, wherein the support (40) comprises a central portion (41) having a rectangular or circular shape.

12. The aerosol provision device of any preceding claim, wherein the power source (30) is removable from the aerosol provision device (2).

13. An aerosol provision system (1) comprising:
the aerosol provision device (2) of any preceding claim; and
aerosol-generating material (3).

14. A power module (60) for an aerosol provision device, the power module comprising:
a power source (30); and
a support (40), the support configured to receive an electrical connector of an aerosol provision, and retain the electrical connector in electrical connection with the power source (30).

15. A method of assembling an aerosol provision device (2) comprising an electrical connector (20) for electrically connecting to a power source (30), the method comprising:
providing a support (40) to support the electrical connector (20) of the aerosol provision device; and
electrically connecting the power source (30) to the electrical connector (20), the power source (30) being retained in electrical connection with the electrical connector (20) by the support (40).
